# EUROPEAN PATENT APPLICATION

(11) **EP 2 153 725 A1**
(43) Date of publication of application: **17.02.2010**
(21) Application number: 09165548.0
(22) Date of filing: 15.07.2009
(51) Int. Cl.: A21D 8/00, A23D 7/005, A23D 7/01, A21D 13/00

(54) **Composition for laminated dough**

(30) Priority: 24.07.2008 BE 200800415; 24.07.2008 EP 08161091; 24.07.2008 EP 08161090
(71) Applicant: Vandemoortele Izegem NV, 8870 Izegem (BE)
(72) Inventor: Lesaffer, Ans, 8870, Izegem (BE); De Laporte, André, 8870, Izegem (BE)
(74) Representative: Brants, Johan P.E.

(57) **Abstract**

The present invention is directed to a composition for laminated dough comprising, in percentage by weight of the total weight from 45 to 65 % of a fat phase comprising a fat blend and at least one emulsifier, and from 35 to 55% of an aqueous phase comprising water, and at least one thickener. The invention is also directed to a method for preparing said composition and to the use thereof for the preparation of a laminated dough.

## Description

### TECHNICAL FIELD

The present invention relates to the field of food industry. The invention concerns, a margarine-like composition of reduced fat content suitable for the production of laminated doughs. The invention is also directed to a method for preparing said margarine-like composition and to the use thereof for the preparation of a laminated dough.

### BACKGROUND

Laminated dough systems, i.e. systems comprising subsequent layers of dough and layers of another ingredient, in particular of a bakery, laminating margarine or shortening, have been known for years. For example, doughs suitable for the production of puff pastries, croissants, Danish pastries, snacks etc. are laminated doughs wherein, in general, 30 to 70wt% of total fat based on product is present in the form of thin fat layers, e.g. between 16 and 256 fat layers are present, and wherein each fat layer is present between two dough layers.

During preparation, margarine is placed on top of a (pre-)dough and folded and rolled to form many alternating layers of dough and fat. The margarine needs a tough waxy body over a wide temperature range. It should approximate the consistency of the dough to remain in a continuous unbroken layer as it stretches and becomes thinner. Fat keeps the layers of dough separate and flaky, and moisture attributes "puff" as it turns to steam during the baking process.

The fat must be present in order to give the baked product satisfactory product properties, such as a good texture, a good structure, a good appearance, a good mouthfeel, a good lift, a good specific volume and/or a good ovenspring.

However, the fat content of acceptable products is still rather high, and in the increasing tendency towards healthier food products, there exists a great demand for fat-reduced laminated doughs.

Margarines of reduced fat content were developed in reply to consumer requirements for healthy and natural foods. Such margarines include in their formulations ingredients such as starches, gums and/or gelling agents, which replace part of the fat content, thus reducing the calorie contribution per gram of margarine.

However, such formulations show several limitations. One problem for instance it that such formulations mimic margarine only for applications at room temperature. Another problem is that such formulations result in products, margarines as well as laminated dough products, that are unsatisfactory and not comparable with those obtained with conventional margarines, particularly, with regard to sensory characteristics such as crustiness, taste, mouthfeel. Other problems of such formulations regard processing parameters such as handling, availability of ingredients or price.

Therefore, there remains a need in the art to provide a margarine-like composition suitable for the production of laminated doughs, which overcomes at least some of the above mentioned problems. In particular, there is a need in the art for a composition for the preparation of laminated doughs which has a reduced fat content, which is perceived as a healthy and natural food, and which results in laminated doughs having good organoleptic and nutritional properties.

### SUMMARY

The present invention provides a composition for laminated doughs which overcomes at least some of the above-mentioned problems and which in particular has reduced fat content, having a formulation that includes ingredients acceptable by a consumer, and when used to prepare laminated doughs, provides bakery products, having good organoleptic, sensory and nutritional properties.

The Applicant has now shown that by the selection and combined use of particular amounts of thickener and emulsifier, a margarine-like composition can be obtained having suitable properties, such as viscosity, rolling-out properties, stability, permitting easy handling and easy processing. In addition, laminated doughs such as croissants, prepared using the present margarine-like composition, fulfill the desired sensory requirements such as good texture and appearance, crispiness, fluffiness and taste.

In a first aspect, the present invention provides a composition for laminated dough comprising, in percentage by weight of the composition:
- from 45 to 65 % by weight of a fat phase comprising a fat blend and at least one emulsifier,
- from 35 to 55% by weight of an aqueous phase comprising water, and at least one thickener.

In one embodiment, the invention provides a composition, wherein the fat phase comprises one emulsifier. In another embodiment, the invention provides a composition, wherein the fat phase comprises at least two different emulsifiers.

The invention provides a composition, wherein said emulsifier(s) is (are) present in a total amount of between 0.1 and 5 % by weight of the composition.

Preferably said emulsifier is selected from the group comprising monoglycerides and diglycerides of saturated fatty acids, monoglycerides and diglycerides of unsaturated fatty acids, citric acid esters (E472c), lactic acid esters (E472b), lecithin (E322), stearoyl lactate (E481), polyglycerol monostearate (E475) and any combinations thereof.

In one embodiment, a composition is provided, wherein said saturated fatty acid is a C₄-C₂₄ saturated fatty acids. In another embodiment, a composition is provided, wherein said unsaturated fatty acid is a C₄-C₂₄ unsaturated fatty acid.

The invention also provides a composition wherein the aqueous phase comprises one thickener. In another embodiment, the invention provides a composition, wherein the aqueous phase comprises at least two different thickeners.

The invention provides a composition, wherein said thickener(s) is (are) present in a total amount of between 0.2 and 10% by weight of the composition.

Preferably said thickener is selected from the group comprising an alginate such as sodium alginate and/or potassium alginate, agar, carrageenan, processed eucheuma seaweed, locust bean gum, oat gum, guar gum, tragacanth, acacia gum, processed acacia gum, xanthan gum, karaya gum, tara gum, gellan gum, gum ghatti, maltodextrin, inulin, starch, gelatin, pectin and any combinations thereof.

The invention also provides a composition wherein the ratio of thickener(s) to emulsifier(s) is comprised between 20:1 and 1:20.

In one embodiment, the invention provides a composition wherein the aqueous phase comprises two different thickeners, and wherein the ratio of a first thickener to a second thickener is comprised between 10:1 and 1:10.

The present composition is characterized by a combination of emulsifier(s) and thickener(s) in particularly beneficial and balanced amounts. To their surprise the Applicants noted that a combination of thickener(s) and emulsifier(s) at the indicated amounts and ratios in a composition according to the invention provides an acceptable stability to the emulsion system. Moreover, the Applicants also surprisingly noted that sensory characteristics, including better mouthfeel and crispiness, of laminated doughs made with a margarine-like composition of the invention improved drastically compared to the sensory characteristics of laminated doughs, made with margarine-like composition without the combination of emulsifiers and thickeners as claimed herein. In addition, the Applicants showed that a combination of emulsifier(s) and thickener(s) as claimed herein, have particularly positive effects on organoleptic properties of laminated doughs, and in particular provide improved mouth feel and flavor to baked laminated dough products.

In a second aspect, the present invention provides a method for the preparation of a composition for laminated dough according to the invention.

In a third aspect, the present invention is directed to the use of a composition according to the invention for the preparation of a laminated dough.

With the insight to better show the characteristics of the invention, some preferred embodiments and examples are described hereafter.

### DETAILED DESCRIPTION OF THE INVENTION

Unless defined otherwise, all technical and scientific terms used herein have the same meaning as is commonly understood by one of skill in the art.

The articles "a" and "an" are used herein to refer to one or to more than one, i.e. to at least one of the grammatical object of the article. By way of example, "a sample" means one sample or more than one sample.

Throughout this application, the term "about" is used to indicate that a value includes the standard deviation of error for the device or method being employed to determine the value.

The recitation of numerical ranges by endpoints includes all integer numbers and, where appropriate, fractions subsumed within that range (*e*.*g*. 1 to 5 can include 1, 2, 3, 4 when referring to, for example, a number of samples, and can also include 1.5, 2, 2.75 and 3.80, when referring to, for example, temperatures). The recitation of end points also includes the end point values themselves (*e*.*g*. from 1.0 to 5.0 includes both 1.0 and 5.0).

Where a percentage is recited in respect of a quantity, it refers to a weight ratio (w/w), unless otherwise indicated. Information on weights is expressed as percent weight of the total weight of the margarine-like composition, unless otherwise specified.

The term "*laminated dough*" as used herein is intended to refer to a bakery product comprising subsequent layers of dough and layers of a fat-containing composition. Non limitative examples of laminated doughs include puff pastries, croissants, Danish pastries, layered snacks, sausage rolls, apple or general fruit turnovers, etc.

### Composition

In a first aspect, the present invention is directed to a margarine-like composition for laminated doughs comprising a fat phase and aqueous phase in a well-balanced ratio, with a particular selection of emulsifier(s) in the fat phase and thickener(s) in the aqueous phase.

In particular, the present invention provides a margarine-like composition for laminated doughs comprising from 45 to 65 % by weight of a fat phase comprising a fat blend and at least one emulsifier, and from 35 to 55 % by weight of an aqueous phase comprising water and at least one thickener.

The expression "*at least one*" in the context of the present invention means at least two, at least three, at least four, etc. and up to at least five, and also includes one. Similarly, the term "*at least two*" thus includes two.

The Applicants have shown that margarine-like compositions having less than 45wt% of a fat phase, when used for preparing laminated doughs, result in laminated doughs such as croissants that do no longer have a uniform laminated appearance and structure. The Applicants have shown that fat components of the composition are at least partly taken up by the dough during the fabrication of the different layers and as a result thereof "bread/bun like" products ("bun-like" products) are formed. Moreover, using a fat phase of at least 45wt% in the present composition has the effect that less water is pressed out of the composition during margarine production and working and that less free water is formed, which involves a reduced risk for microbial contamination and thus improved effects on the shelf-life of the product. On the other hand, a margarine-like composition according to the invention having less than 65wt% of a fat phase enables the preparation of fat-reduced laminated doughs, which are healthier food products compared to doughs prepared with higher amounts of fat. The present invention is therefore directed to a composition which has an optimal balance of fat phase and aqueous phase.

In a preferred embodiment, the fat phase comprises a fat blend. In a preferred embodiment, the fat blend comprises vegetable solid fat(s) and vegetable oil(s) of which a part can be hydrogenated, interesterified or fractionated fats, so as to obtain a consistency (solid fat profile) as is customary for laminating margarines. Fat(s) and oil(s) can be selected from the group comprising safflower oil, sun flower oil, corn oil, cottonseed oil, rapeseed oil, soybean oil, olive oil, coconut oil, palm oil, rice oil, sesame oil, kapok oil, peanut oil, cacao butter, shea butter and palmstearin. Compositions of vegetable fat blends and techniques for preparation thereof for use in laminating margarines are well known in the art and will therefore not be described in detail herein.

In one embodiment, the fat phase of the present composition comprises one emulsifier. In another embodiment the fat phase of the present composition comprises two emulsifiers. In still another embodiment the fat phase of the present composition comprises more than two emulsifiers.

Suitable examples of emulsifiers that can be applied in a composition of the invention are selected from the group comprising monoglycerides and diglycerides of saturated fatty acids, monoglycerides and diglycerides of unsaturated fatty acids, lactic acid esters (E472b), citric acid esters (E472c), stearoyl lactate (E481), polyglycerol monostearate (E475), lecithin (E322) and any combinations thereof.

In a preferred embodiment, a composition according to the invention has a total amount of emulsifier which is comprised between 0.1 and 5 %, and for instance between 0.2 and 2.5 %, or between 0.5 and 1 % by weight of the composition, and which for instance is 0.1, 0.2, 0.3, 0.4, 0.5, 0.6, 0.7, 0.8, 0.9 or 1.0% by weight of the composition.

In one embodiment said emulsifier is a monoglyceride of a fatty acid. In another embodiment said emulsifier is a diglyceride of fatty acids. Said fatty acids may be saturated or unsaturated fatty acids. In an embodiment said fatty acid is a C4-C24 fatty acid, including a C4, C6, C8, C10, C12, C14, C16, C18, C20, C22, or a C24 fatty acid, and also including -if applicable- uneven fatty acids such as e.g. a C11, C13, C15, C17, C19 fatty acid.

In one embodiment said emulsifier is a monoglyceride of a saturated fatty acid. In another embodiment said emulsifier is a diglyceride of saturated fatty acids. Preferably said saturated fatty acid is a C4-C24 saturated fatty acid, or a C12-C22 saturated fatty acid. In an example said emulsifier is a monoglyceride of a C4, C6, C8, C10, C12, C14, C16, C18, C20, C22, C24 saturated fatty acid. In another example said emulsifier is a diglyceride of C4, C6, C8, C10, C12, C14, C16, C18, C20, C22, C24 saturated fatty acid and any combinations thereof. Examples of suitable emulsifiers include but are not limited to a monoglyceride of a saturated fatty acid or a diglyceride of saturated fatty acids, wherein said saturated fatty acid is selected from the group comprising lauric acid, myristic acid, palmitic acid, stearic acid, arachidic acid, behenic acid, and any combinations thereof.

In an embodiment, a composition according to the invention has an amount of emulsifier which is a monoglyceride of a saturated fatty acid or a diglyceride of saturated fatty acids as defined above, which is comprised between 0.1 and 5 %, and for instance between 0.2 and 2.5 %, or between 0.5 and 1 % by weight of the composition, and which for instance is 0.1, 0.2, 0.3, 0.4, 0.5, 0.6, 0.7, 0.8, 0.9 or 1.0% by weight of the composition.

In another embodiment said emulsifier is a monoglyceride of an unsaturated fatty acid. In another embodiment said emulsifier is a diglyceride of unsaturated fatty acids. The term "unsaturated fatty acid" includes mono-unsaturated and poly-unsaturated fatty acids. Preferably said unsaturated fatty acid is a C4-C24 unsaturated fatty acid, or a C12-C18 unsaturated fatty acid. In an example said emulsifier is a monoglyceride of a C4, C6, C8, C10, C12, C14, C16, C18, C20, C22, C24 unsaturated fatty acid. In another example said emulsifier is a diglyceride of C4, C6, C8, C10, C12, C14, C16, C18, C20, C22, C24 unsaturated fatty acids and any combinations thereof. Examples of suitable emulsifiers include but are not limited to a monoglyceride of an unsaturated fatty acid or a diglyceride of unsaturated fatty acids, wherein said unsaturated fatty acid is selected from the group comprising myristoleic acid, palmitoleic acid, oleic acid, linoleic acid, alpha-linoleic acid, gamma-linoleic acid, arachidonic acid, eicosapentaenoic acid, erucic acid, docosahexenoic acid and any combinations thereof.

In an embodiment, a composition according to the invention has an amount of emulsifier which is a monoglyceride of an unsaturated fatty acid or a diglyceride of unsaturated fatty acids as defined above, which is comprised between 0.1 and 5 %, and for instance between 0.2 and 2.5 %, or between 0.5 and 1 % by weight of the composition, and which for instance is 0.1, 0.2, 0.3, 0.4, 0.5, 0.6, 0.7, 0.8, 0.9 or 1.0% by weight of the composition.

In another embodiment, said emulsifier is a lactic acid ester. As used herein, the term "lactic acid ester" refers to a compound obtained as a result of the reaction of lactic acid with a monoglyceride. These monoglycerides can be from vegetable or animal origin, saturated or unsaturated. Lactic acid esters used herein and also called lactaded glycerides, and are denominated as E472b in food technology. Lactic acid esters are well known in the prior art. An example of lactic acid esters suitable for use in the present composition includes lactic acid esters which are available e.g. under the trademark Grindsted ® Lactem.

In yet another embodiment, said emulsifier is a citric acid ester. As used herein, the term "citric acid ester" refers to a compound obtained as a result of the reaction of citric acid with a monoglyceride. These monoglycerides can be from vegetable or animal origin, saturated or unsaturated. Citric acid esters used herein and also called citrated glycerides, and are denominated as E472c in food technology. They form a highly hydrophilic emulsifier with a stable alpha-crystal structure. Citric acid esters are well known presenting the prior art. For example, citric acid esters suitable for use in the present composition are available e.g. under the trademark Grindsted ® Citrem.

In another embodiment, a composition according to the invention has an amount of emulsifier which is a citric acid ester and/or a lactic acid ester as defined above, which is comprised between 0.1 and 5 %, and for instance between 0.2 and 2.5 %, or between 0.5 and 1 % by weight of the composition, and which for instance is 0.1, 0.2, 0.3, 0.4, 0.5, 0.6, 0.7, 0.8, 0.9 or 1.0% by weight of the composition.

In yet another embodiment, said emulsifier is lecithin (E322), which may be added to a composition according to the invention in an amount of between 0.1 and 5 %, and for instance of between 0.2 and 2.5 %, or of between 0.5 and 1 % by weight of the composition, and which for instance of 0.1, 0.2, 0.3, 0.4, 0.5, 0.6, 0.7, 0.8, 0.9 or 1.0% by weight of the composition.

In another embodiment, said emulsifier is stearoyl lactate (E481), which may be added to a composition according to the invention in an amount of between 0.1 and 5 %, and for instance of between 0.2 and 2.5 %, or of between 0.5 and 1 % by weight of the composition, and which for instance of 0.1, 0.2, 0.3, 0.4, 0.5, 0.6, 0.7, 0.8, 0.9 or 1.0% by weight of the composition.

In still another embodiment, said emulsifier is polyglycerol monostearate (E475). which may be added to a composition according to the invention in an amount of between 0.1 and 5 %, and for instance of between 0.2 and 2.5 %, or of between 0.5 and 1 % by weight of the composition, and which for instance of 0.1, 0.2, 0.3, 0.4, 0.5, 0.6, 0.7, 0.8, 0.9 or 1.0% by weight of the composition.

In yet another embodiment, the present composition may have a fat phase comprising a combination of one or more of the above mentioned emulsifiers, and selected form the group comprising monoglycerides and diglycerides of saturated fatty acids, monoglycerides and diglycerides of unsaturated fatty acids, lactic acid esters (E472b), citric acid esters (E472c), stearoyl lactate (E481), polyglycerol monostearate (E475), and lecithin (E322).

In one embodiment, the aqueous phase of the present composition comprises one thickener. In another embodiment the aqueous phase of the present composition comprises two thickeners. In still another embodiment the aqueous phase of the present composition comprises more than two thickeners.

Suitable examples of thickeners that can be applied in a composition of the invention are selected from the group comprising alginate such e.g. sodium alginate or potassium alginate, agar, carrageenan, processed eucheuma seaweed, galactomannas, locust bean gum, oat gum, guar gum, tragacanth, acacia gum, processed acacia gum, xanthan gum, karaya gum, tara gum, gellan gum, gum ghatti, maltodextrin, inulin, starch, gelatin, pectin and any combinations thereof.

In a preferred embodiment, a composition according to the invention has a total amount of thickener which is comprised between 0.2 and 10 %, and for instance of 0.5, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, or 10% by weight of the composition.

The term "*processed eucheuma seaweed*" as used herein is intended to refer to eucheuma seaweed that has been submitted to an alkaline treatment from natural stem of *eucheuma cottonii and eucheuma spinosum* to remove impurity and extract the product by washing step and desiccation.

In on example the present composition comprises as thickener an alginate. As used herein, the term "alginate" refers to a hydrocolloid gum. Alginate is a family of unbranched binary copolymers of (1-4-linked - β-D-mannuronic acid (M) and α-L-guluronic (G)). Alginate is used to reduce fat levels by allowing increased water contents in the lowered fat foods, the hydrocolloid serving to bind water. Without being bound by a theory the Applicants assume that in emulsions the alginate extends beyond the water-oil interface and interacts with the emulsifier present in the composition and modifies the stability of the emulsion. An alginate which may be used in a composition according to the invention is for instance selected from the group comprising sodium alginate, potassium alginate, and combinations thereof.

A composition according to the invention may comprise alginate as defined above in an amount of between 0.2 and 10 %, or between 1.5 and 7% by weight of the composition.

In another example the present composition comprises inulin as thickener. As used herein, the term "inulin" is intended to refer to a polysaccharide of fructose units connected by β-(2-1) links. The molecular weight of inulin is dependent upon its source. Inulin as used herein can be derived from plant tubers, such as but not limited to, dahlia, Jerusalem artichokes and chicory. Inulin, being a water soluble fiber, is associated with improved digestion and absorption of certain minerals, particularly calcium. Furthermore, being a prebiotic, inulin favors the growth of probiotic bacteria in the intestine with all the related beneficial effects. An illustrative examples of an inuline product for use in the current embodiments, is inuline available from Orafti S.A., Belgium, under the trade name Raftiline^{™}. In another example, inulin is a thickener contained in a composition according to the invention, is derived from chicory, and has a total number of fructose or glucose units (degree of polymerisation, DP) ranging mainly between 2 and 60.

A composition according to the invention may comprise inulin as defined above in an amount of between 1 and 10%, and for instance of between 1.5 and 7% by weight of the composition.

In another example the present composition comprises maltodextrin as thickener. As used herein, the term "maltodextrin" is intended to refer to a nutritive saccharide polymer that consists of D-glucose units linked primarily by α-1-4 bonds and that has a dextrose equivalent, abbreviated as DE. Maltodextrin can be derived from any starch, including but not limited to corn starch, potato starch, or rice starch, by partial hydrolysis with safe and suitable acids and enzymes. It is available as a powder or concentrated solution. Maltodextrin either can be moderately sweet or have hardly any flavor at all. Maltodextrin is easily digestible, being absorbed as rapidly as glucose.

Dextrose equivalence reflects the amount of hydrolysis performed upon the starch and measures the amount of reducing sugar in each compounds, 0 being the reducing sugar content of starch and 100 being the reduction power of dry glucose. In accordance with the present invention, maltodextrin contained in a composition according to the invention preferably has a DE of less than 70, and for instance less than 50 or less than 25. The Applicants has shown that when maltodextrin having a higher DE were used to prepare a margarine-like composition and laminated dough products, layer formation in the prepared dough products was seriously hampered, and water droplets were expelled out of the composition during preparation of the dough products. In an example said maltodextrin is a thickener contained in a composition according to the invention, is obtained from potato, and has a dextrose equivalence (DE) of less than 50.

A composition according to the invention may comprise maltodextrin as defined above in an amount of between 1 and 10%, and for instance of between 1.5 and 7% by weight of the composition.

In yet another example, the present composition comprises acacia gum, also denoted as gum Arabic or E414 as thickener.

In another example, the present composition comprises processed acacia gum as thickener. The term "*processed acacia gum*" as used herein refers to acacia gum that has been processed with other component(s) and in particular refers to compositions comprising more than 95wt% of acacia gum. A preferred example of processed acacia gum is known under the trade name "equacia" and consists of 98wt% acacia gum and 2% wheat fibers.

A composition according to the invention may comprise acacia gum or processed acacia gum in an amount of between 1 and 10%, and for instance of between 1.5 and 7% by weight of the composition.

In still another example, the present composition comprises pectin as thickener. A composition according to the invention may comprise pectin in an amount of between 1 and 10%, and for instance of between 1.5 and 7% by weight of the composition.

In another example, the present composition comprises a combination of two different thickeners. For example the composition may comprise a combination of alginate (sodium and/or potassium alginate), and inulin, or of alginate and maltodextrin, or of alginate and (processed) acacia gum, or of alginate and pectin, or of pectin and inulin, or of pectin and maltodextrin, or of pectin and (processed) acacia gum, or of inulin and (processed) acacia gum, or of maltodextrin and (processed) acacia gum, or of pectin and starch, or of inulin and starch, or of starch and (processed) acacia gum, or of maltodextrin and starch, etc..

In one embodiment, the invention provides a composition wherein the aqueous phase comprises two different thickeners, and wherein the ratio of a first thickener to a second thickener is comprised between 10:1 and 1:10, and for instance is 9:1, 8:1, 7:1, 6:1, 5:1, 4:1, 3:1, 2:1, 1:1, 1:2, 1:3, 1:4, 1:5, 1:6, 1:7, 1:8 or 1:9.

In another embodiment, when a composition is provided wherein the aqueous phase comprises two different thickeners, and wherein one of said thickeners is alginate, e.g. sodium and/or potassium alginate, said alginate may be present in an amount of between 0.1 and 5% by weight of the composition, and for instance of between 0.1 and 2% by weight of the composition, and for instance of 0.1, 0.3, 0.5, 1.0, 1.5, 2.0, 2.5, 3.0, 3.5, 4.0, 4.5, 5.0% by weight of the composition, and the other thickener may be present in an amount of between 1 and 10% by weight of the composition, and for instance of between 1.5 and 7% by weight of the composition, and for instance of for instance of 1.0, 1.5, 2.0, 2.5, 3.0, 3.5, 4.0, 4.5, 5.0, 5.5, 6.0, 6.5, 7.0, 7.5, 8.0, 8.5, 9.0, 9.5% by weight of the composition.

The amounts of thickener(s) in the present composition have been carefully determined by the Applicants in order to provide good organoleptic (taste, flavor) and physical properties to end products prepared with the composition. Using the indicated amounts of thickeners enables to provide a good flavor effect in baked end products, while further also providing a laminated dough product that is crispy and has a good mouthfeel. Further, the indicated amounts of thickener(s) also permit to avoid the preparation of laminate doughs tasting like "chewing gum" in the mouth.

The Applicants have further carefully determined the relative amounts of emulsifier(s) and thickener(s) which can be used in a composition according to the invention. In a preferred embodiment, the invention provides a composition comprising thickener(s) and emulsifier(s) in a ratio of thickener(s) to emulsifier(s) comprised between 20:1 and 1:20, and for instance of 15:1; 10:1; 5:1, 3:1, 1:1, 1:3, 1:5, 1:10, 1:15.

A composition according to the invention may further comprise one or more additional components including but not limited to pH regulators, diary flavoring agents, coloring agents, antioxidants, salts, acidulants, minerals, proteins, vitamins, and preservatives, and the like. Such addititional components are well known by a skilled person and will not be disclosed in detail herein.

Compositions according to the present invention have particularly suitable properties, including good rolling-out properties, stability, plasticity, hardness. Further the margarines of the invention are easy to handle and facilitate the processing of laminated dough. In particular, during fabrication of the margarine, there is no water release during extrusion of the margarine. Moreover, the present composition enables essentially the same handling and extrusion properties as standard laminating margarines of 80 % fat. Also, when using a composition according to the invention to prepare laminated dough, no sticky dough is obtained, the products shows continuous fat layers. In addition, laminated doughs such as croissants, prepared using the present compositions fulfill desired sensory requirements such as good texture and appearance, crispiness, fluffiness and taste.

### Method

In another aspect the invention provides a process for the preparation of a composition for laminated dough according to the invention, comprising the steps of:
a) preparing an aqueous phase, preferably at a temperature of 75-85°C, of one, two or more than two thickeners as defined herein solved in water;
b) preparing a fat phase preferably at a temperature at 70 to 80°C comprising
   a. a fat blend as defined herein, and
   b. one, two or more than two emulsifiers as defined herein, and
   c. optionally fat-soluble ingredients such as e.g. b-carotene,
c) adding the aqueous phase of step a) during stirring to fat phase of step b) at a temperature of 60-80°C thereby obtaining an emulsion,
d) plasticizing the composition of step c), and
e) leaving the composition of step d) to rest for 2 to 8 days at 5-15 °C.

According to a particular embodiment the method may comprise the following steps:
a) preparing a hot, homogeneous aqueous phase, preferably at 75-85°C, of one, two or more than two thickeners as defined herein;
b) preparing a homogeneous fat phase by the steps of:
   b1) preparing a first fat composition by blending fats and oils as defined herein;
   b2) preparing at a temperature of between 70 and 80°C a second fat composition, whereby said composition is a homogeneous mixture of one or more vegetable fats as defined herein and one, two or more than two emulsifiers as defined herein, and
   b3) optionally preparing at room temperature a third fat composition, whereby said composition is a homogeneous mixture of one or more vegetable fats as defined herein and fat-soluble ingredients such as e.g. b-carotene, and
   b4) blending the fat compositions obtained in steps b1), b2), b3),
c) adding the aqueous phase of step a) during stirring to fat phase of step b) at a temperature of 60-80°C thereby obtaining an emulsion,
d) plasticizing the composition of step c), and
e) leaving the composition of step d) to rest for 2 to 8 days at 5-15 °C.

In an embodiment, the aqueous phase prepared in step a) also contains all the other watersoluble ingredients such as e.g. salt, citric acid, etc. In another embodiment, the fat phase prepared in step b) contains all fat-soluble ingredients such as fats, emulsifiers, coloring agents, etc.

In embodiments wherein more than one thickener is applied, a stock solution of thickeners is made during step a) by first dispersing the first thickener in water at a suitable temperature, e.g. up to 80 °C for alginate, up to 60° for pectin, up to 85°C for maltodextrin, or up to 75°C for inulin, with stirring and adding, still when stirring, a second thickener, in amounts and ratios as defined above. This stock solution is than dosed in the aqueous phase, i.e. the phase a) mentioned above. The aqueous dispersion preferably has a temperature between 50-65 °C.

According to the present method, a fat composition can be prepared by blending one or more vegetable fats, e.g. palm oil, palm stearine, soybean oil, coconut oil, etc. In addition, an emulsifier phase is prepared and is added to said fat blend.

Preferably plasticizing is performed on a scraped surface crystallizer with pinrotors to obtain e.g. 22 °C at the moment of packaging.

The following non-limiting examples illustrate the invention and do not limit its scope in any way.

In the examples and through this specification, all percentages, parts and ratios are by weight of the margarine-like composition unless indicated otherwise.

### EXAMPLES

### Example 1: Margarine compositions according to the invention

Table 1 represents examples of compositions for laminated dough according to the invention.

**Table 1**

| **Composition** | **ref wt%** | **1 wt%** | **2 wt%** | **3 wt%** | **4 wt%** | **5 wt%** | **6 wt%** | **7 wt%** |
|---|---|---|---|---|---|---|---|---|
| vegetable fats (1) | 79.5 | 54 | 49.5 | 54 | 54 | 54.3 | 57 | 54.2 |
| a citric acid ester (2) | 0.5 | 1 | | 1 | 1 | | 0.8 | |
| Mono- and di-glycerides (3) | | | 0.5 | | | 0.5 | | 0.8 |
| Stearoyl lactate (E481) | | | | | | | 0.2 | |
| Polyglycerol monostearate (E475) | | | | | | 0.2 | | |
| water | 18.44 | 41.9 | 38.4 | 39.4 | 38.4 | 36.4 | 32.4 | 36.6 |
| Alginate (4) | | 1.5 | | | | | | 0.8 |
| Inulin (5) | | | 10 | | | | 7 | |
| Processed acacia gum (6) | | | | 4 | | | | |
| Pectin (7) | | | | | 5 | | 1 | |
| maltodextrin (8) | | | | | | 7 | | 6 |
| diacetyl | 0.005 | 0.005 | 0.005 | 0.005 | 0.005 | 0.005 | 0.005 | 0.005 |
| b-carotene | 0.005 | 0.005 | 0.005 | 0.005 | 0.005 | 0.005 | 0.005 | 0.005 |
| citric acid anhydrate | 0.03 | 0.05 | 0.05 | 0.05 | 0.05 | 0.05 | 0.05 | 0.05 |
| NaCl | 1.5 | 1.5 | 1.5 | 1.5 | 1.5 | 1.5 | 1.5 | 1.5 |
| potassium sorbate (9) | 0.02 | 0.04 | 0.04 | 0.04 | 0.04 | 0.04 | 0.04 | 0.04 |

| | | | | | | | | |
|---|---|---|---|---|---|---|---|---|
| (1) 40 % palmoil, 40 % palmstearin and 20 % rapeseed oil (2) citric acid esters of mono/diglycerides E472c (Cargill) (3) mono- and di-glycerides correspond to Dimodan HP (Danisco) (4) potassium alginate, in particular Satialigne LSP262 (Cargill) (5) inulin Beneo HP (Orafti SA); (6) Processed acacia gum corresponds to a composition comprising 98wt% acacia gum and 2wt% wheat fibers (also known as equacia) purchased from Kreglinger (7) pectin corresponds to unipectin OF405C, Cargill (8) maltodextrin corresponds to C*Dry MD 01904 (9) potassium sorbate (Caldic Belgium) | | | | | | | | |

The margarine-like compositions represented in Table 1 were prepared by carrying out the method as defined herein. An aqueous phase and a fat phase were prepared as described above and mixed together to form a homogenous emulsion.

In case of compositions comprising more than one thickener, a stock solution of one of the thickener was made at a temperature suitable for dissolving the thickener, and the powder of the other thickener was directly added to the aqueous phase and heated up to a temperature suitable for the respective thickener (suitable temperature are for instance up to 60° for pectin, up to 85°C for maltodextrin, up to 80°C for alginate, and up to 75°C for inulin. After the heating step, that aqueous phase was cooled till 60 °C.

The obtained homogenous emulsion was transferred to a scraped surface plasticizer for plasticization and was finally sent on to packaging and storage for 7 days at 12 °C. The margarine was then ready to be used for the preparation of laminated doughs.

The properties of the obtained margarines were evaluated. Evaluation was done by calibrated kneaders. Results indicated that compositions 1 to 7 as represented in Table 1 have suitable properties which are comparable with those of a reference margarine of 80% fat.

### Example 2: Laminated dough

Using the compositions prepared as described in example 1 croissants were prepared. For that a pre-dough was made according to techniques known in the art using 1250gram flour, 100gram sugar, 575 gram water, 100gram yeast, 25gram salt and 100gram eggs.

For preparation of croissants 500 g fat composition for 2 kg pre-dough was used. Croissants were made by the steps of :
- mixing and kneading of the pre-dough
- resting for 10 minutes
- rolling of dough to a square
- providing the pre-dough with the fat composition, e.g. by applying the composition on top of the pre-dough, the fat composition had a temperature of about 20 °C, and
- folding and laminating.

The obtained laminated dough was proofed for 45 minutes (32 °C; 85% R.H). The obtained products were then baked at 220 °C for about 17 minutes. The height of 12 obtained baked croissants was determined (see Table 2).

**Table 2**

| | ref | 1 | 2 | 3 | 4 | 5 | 6 | 7 |
|---|---|---|---|---|---|---|---|---|
| Height (cm) | 74 | 72 | 70 | 72 | 74 | 70 | 73 | 72 |

From these results it appears that croissants made with fat compositions as illustrated in Table 1 all have a height comparable to that of croissants made with a conventional 80% fat margarine. The compositions as illustrated in Table 1 consisted of a sufficiently plastic margarine-like product that was used to prepare croissants which showed acceptable layering properties and a satisfactory separation of the fat/dough layers.

The taste and organoleptic properties of the croissants were evaluated by a trained taste panel and were reported to be as follows. Croissants were crispy and stayed not too long in the mouth (what is preferred) for all compositions tested, which illustrates that the present compositions provide suitable taste and mouth feel properties to laminated products.

Croissants made with the reference margarine and the fat compositions as illustrated in Table 1 were thus equivalent with respect to shape, taste and layering.

## Claims

1. Composition for laminated dough comprising, in percentage by weight of the composition:
- from 45 to 65 % by weight of a fat phase comprising a fat blend and at least one emulsifier,
- from 35 to 55% by weight of an aqueous phase comprising water, and at least one thickener.

2. Composition according to claim 1, wherein the fat phase comprises at least two different emulsifiers.

3. Composition according to claim 1 or 2, wherein said emulsifier(s) is (are) present in a total amount of between 0.1 and 5 % by weight of the composition.

4. Composition according to any of claims 1 to 3, wherein said emulsifier is selected from the group comprising monoglycerides and diglycerides of saturated fatty acids, monoglycerides and diglycerides of unsaturated fatty acids, citric acid esters (E472c), lactic acid esters (E472b), lecithin (E322), stearoyl lactate (E481), polyglycerol monostearate (E475) and any combinations thereof.

5. Composition according to claim 4, wherein said saturated fatty acid is a C₄-C₂₄ saturated fatty acid, and for instance selected from the group comprising lauric acid, myristic acid, palmitic acid, stearic acid, arachidic acid, behenic acid, and any combinations thereof.

6. Composition according to claim 4, wherein said unsaturated fatty acid is a C₄-C₂₄ unsaturated fatty acid, and for instance selected from the group comprising myristoleic acid, palmitoleic acid, oleic acid, linoleic acid, alpha-linoleic acid, gamma-linoleic acid, arachidonic acid, eicosapentaenoic acid, erucic acid, docosahexenoic acid, and any combinations thereof.

7. Composition according to any of claims 1 to 6, wherein the aqueous phase comprises at least two different thickeners.

8. Composition according to any of claims 1 to 7, wherein said thickener(s) is (are) present in a total amount of between 0.2 and 10% by weight of the composition.

9. Composition according to any of claims 1 to 8, wherein said thickener is selected from the group comprising alginate such e.g. sodium alginate or potassium alginate, agar, carrageenan, processed eucheuma seaweed, galactomannas, locust bean gum, oat gum, guar gum, tragacanth, acacia gum, processed acacia gum, xanthan gum, karaya gum, tara gum, gellan gum, gum ghatti, maltodextrin, inulin, starch, gelatin, pectin and any combinations thereof.

10. Composition according to any of claims 1 to 9, wherein the ratio of thickener(s) to emulsifier(s) is comprised between 20:1 and 1:20.

11. Composition according to any of claims 7 to 10, wherein the aqueous phase comprises two different thickeners, and wherein the ratio of a first thickener to a second thickener is comprised between 10:1 and 1:10.

12. Process for the preparation of a composition for laminated dough according to any of the previous claims 1 to 11, comprising the steps of:
a) preparing a homogeneous aqueous phase of thickener(s) as defined in any of claims 1 and 7 to 11 solved in water,
b) preparing a fat phase comprising a fat blend and emulsifier(s), as defined in any of claims 1 to 6,
c) adding the aqueous phase of step a) during stirring to fat phase of step b) at a temperature of 60-80°C thereby obtaining an emulsion,
d) plasticizing the composition of step c), and
e) leaving the composition of step d) to rest for 2 to 8 days at 5-15 °C.

13. Use of a composition according to any of the claims 1 to 11 for the preparation of a laminated dough.
